# EUROPEAN PATENT APPLICATION

(11) **EP 2 194 673 A2**
(43) Date of publication of application: **09.06.2010**
(21) Application number: 09177476.0
(22) Date of filing: 30.11.2009
(51) Int. Cl.: H04L 9/32

(54) **Method of detecting a counterfeit RFID tag**

(30) Priority: 02.12.2008 US 326127
(71) Applicant: The Goodyear Tire & Rubber Company, Akron, OH 44316-0001 (US)
(72) Inventor: Lettieri, Joseph Carmine, Hudson, OH 44236 (US)
(74) Representative: Kutsch, Bernd

(57) **Abstract**

A method for determining a counterfeit from authentic RFID tag includes: assigning a unique tag identification number T wherein T= tag identification number TID; locking the unique number T into tag memory; assigning a secondary unique number E wherein E= an electronic product code EPC; locking the unique number E into tag memory; deriving a kill password K calculated based on an encryption algorithm f wherein K =f(T,E); locking the kill password K into tag memory; reading from the tag T'=TID; E'=EPC; and K'=kill password; calculating an expected kill password Kₑ based on the encryption algorithm f wherein Kₑ =f (T',E'); comparing Kₑ to K'; concluding the tag is suspected counterfeit if Kₑ does not equal K'.

## Description

### Field of the Invention

The present invention relates generally to a method of detecting a counterfeit RFID tag and, more particularly, a method of detection that does not require use of an external database for RFID tag verification or authentication.

### Background of the Invention

The use of RFID tags in commercial applications is of increasing importance. Such tags are incorporated into sundry products for the purpose of product identification as well as tracking a product from manufacture through ultimate end use. An RFID tag is typically manufactured by an electronics manufacturer for subsequent incorporation into an object by the manufacturer of that object. A product identification code is typically incorporated into the tag by the manufacturer of a product and the tag is affixed to the product throughout the life of the product. The RFID tag thus contains data identifying the product into which it is incorporated that is accessible to an external reader. The stored data may include an identification of the tag as well as the product into which it is incorporated.

It is an increasing problem for RFID tags associated with an object to be fraudulently removed or replaced by counterfeit tags in order to circumvent identification by reader systems. For example, an RFID tag may be incorporated into a commercial trailer tire and tracked as the trailer is transported from location to location. The tag may contain data identifying the tire to the trailer and load so that the transporter can ensure that the tires originally placed on the trailer remain so placed. Other types of information may be stored into the RFID tag memory data base and externally accessed by a reader such as the load being transported and the tractor utilized in conjunction with the trailer. A fraudulent replacement of the tires on the trailer may go undetected if the RFID tag is replaced by a counterfeit and the counterfeit is programmed to have the product identification data. It is accordingly a desire of the industry to have the means to detect whether a given RFID tag is counterfeit. Such a method should be capable of field application without requiring recourse to information or data from a database.

### Summary of the Invention

The invention relates to a method according to claim 1 or 13.

Dependent claims refer to preferred embodiments of the invention.

According to a preferred aspect of the invention, a method for determining a counterfeit from authentic RFID tag includes: assigning a unique tag identification number T wherein T= tag identification number TID; locking the unique number T into tag memory; assigning a secondary unique number E wherein E= a unique electronic product code EPC; locking the unique number E into tag memory; deriving a kill password K calculated based on an encryption algorithm f wherein K =f(T,E); locking the kill password K into tag memory; reading from the tag T'=TID; E'=EPC; and K'=kill password; calculating an expected kill password Kₑ based on the same encryption algorithm f wherein Kₑ =f (T',E'); comparing Kₑ to K'; concluding the tag is suspected counterfeit if Kₑ does not equal K'. It may further be concluded that the tag is authentic should the comparison result in Kₑ equaling K'.

In another preferred aspect of the invention, the assignment and locking of TID and EPC are conducted by separate first and second parties. Assignment and locking of TID may be effected by a party such as the tag source and assignment and locking of the EPC and/or the kill password may be effected by a second party such as the source of an object into which the tag is incorporated.

### Brief Description of the Drawings

The invention will be described by way of example and with reference to the accompanying drawings in which:
FIG. 1 is a perspective view of a RFID tag.
FIG. 2 is a perspective view of a RFID tag in an encoding procedure station.
FIG. 3 is a perspective view of a tire having an RFID tag mounted thereto.
FIG. 4 is a schematic view of a read station for a tractor and trailer having RFID tag equipped tires.
FIG. 6 is a chart of a method of encoding and decoding a RFID tag.
FIG. 7 is a chart comparing the encoding of an original tag against a counterfeit encoded tag.

### Detailed Description of the Invention

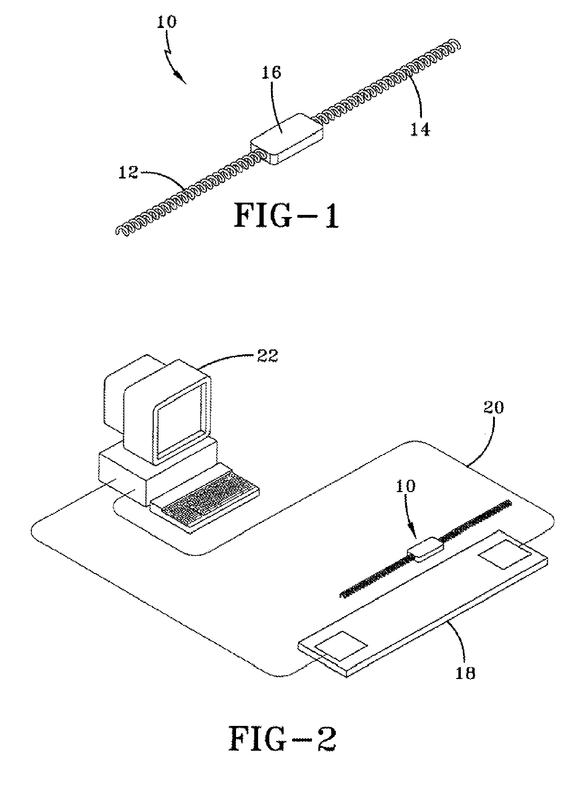

Referring initially to FIGS. 1-3, an RFID tag 10 is shown in a dipole antenna configuration in which coiled antenna segments 12, 14 are coupled to an electronics package 16. Other RFID tag configurations may be used with the invention as well. RFID tag 10 is of a type in common use within the industry and includes electronic data storage such as RAM or ROM memory and transmission/receiver circuitry by which data may be inputted into the tag memory and accessed by a remote reader (not shown).

The RFID tag 10 may be programmed with data including a tag identification number using the station depicted in FIG. 2. The tag 10 receives a data transmission signal from an antenna within pad 18 that connects by means of line 20 to a transmission device 22. The transmitted data is stored in tag memory. Typically, the RFID tag or ASIC (application specific integrated circuit) manufacturer will assign a unique tag identification number (hereinafter referred to as TID) to each tag manufactured and sold. The identification number is used for quality assurance purposes as well as to uniquely identify a particular tag in field use.

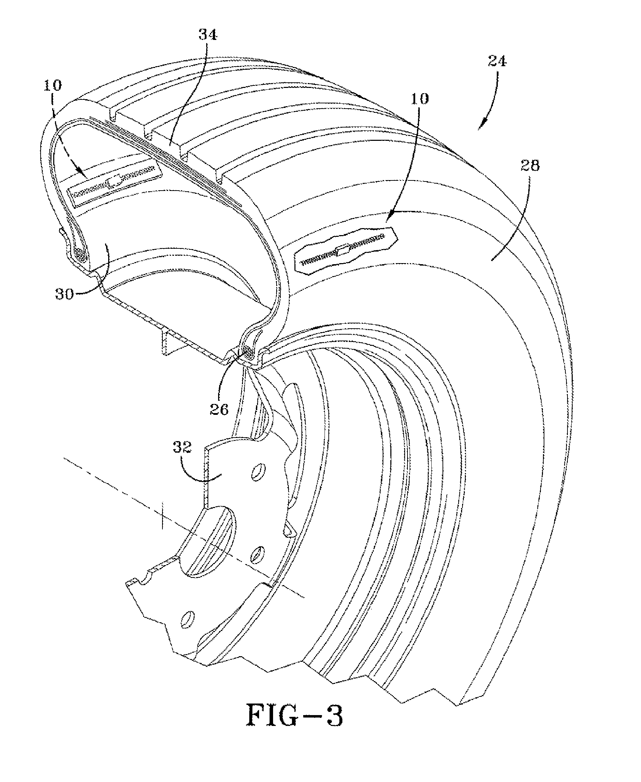

As shown in FIG. 3, the tag 10 may be incorporated into a wide variety of manufactured products such as a tire 24. While a tire is used herein as a representative product into which a tag 10 may be incorporated, the invention is not intended to be limited thereto.

With reference to FIGS. 3-5, a drive-over reader system 36 for a vehicle having one or more wheel mounted RFID tags or devices 10 is shown. As used herein, "transponder device" is used in its broad connotation and includes devices such as RFID tags and other devices for data storage and transmission. The reader system 36 is located within a read station through which the vehicle is preferably, although not necessarily, is driven during a tag-reading operation. The vehicle transponder device(s) 10 may be mounted to a wheel unit 38 in a number of locations, such as those identified in FIG. 3. The wheel unit 38 includes a tire 24 of conventional construction having a pair of beads 26, a tire carcass 28 extending between the beads 26, a tire crown region 34, and a tire inner liner 30. The tire is mounted to a wheel rim 32 in conventional fashion. One or more wheel units 38 of a vehicle may be provided with one or more transponder devices 10.

The transponder device or RFID tag 10 is of a type common within the industry and commercially available. The device combines data storage and transmission capability initiated by receipt of RF signal. Upon activation, the transponder transmits an RF data stream to a remote RF receiver. The stored data may include pertinent information that a user would find beneficial to monitor in the operation of a vehicle or a commercial fleet, such as an identification of the vehicle, the tire, the wheel unit, and/or the cargo conveyed by the vehicle and its destination. The RF transponder may be read-only or may include read-write capability. Because a proper identification of the tire/trailer/tractor and its cargo may utilize the data stored within the device 10, it is important that the integrity of the device 10 and data stored therein be established and maintained. A fraudulent or inadvertent replacement of an authentic tag 10 with a counterfeit tag may have costly consequences in applications where the tag data is utilized to ensure a proper identification of the object to which the tag attaches.

Data from the wheel unit transponder(s) 10 are received by antenna device(s) 40 that are located within a read station and relayed by connections 42 to an RF transceiver 44 connected by data transmission lines 46 to a data processing computer 48. A display of information from the RFID tag 10 to a user is thereby facilitated.

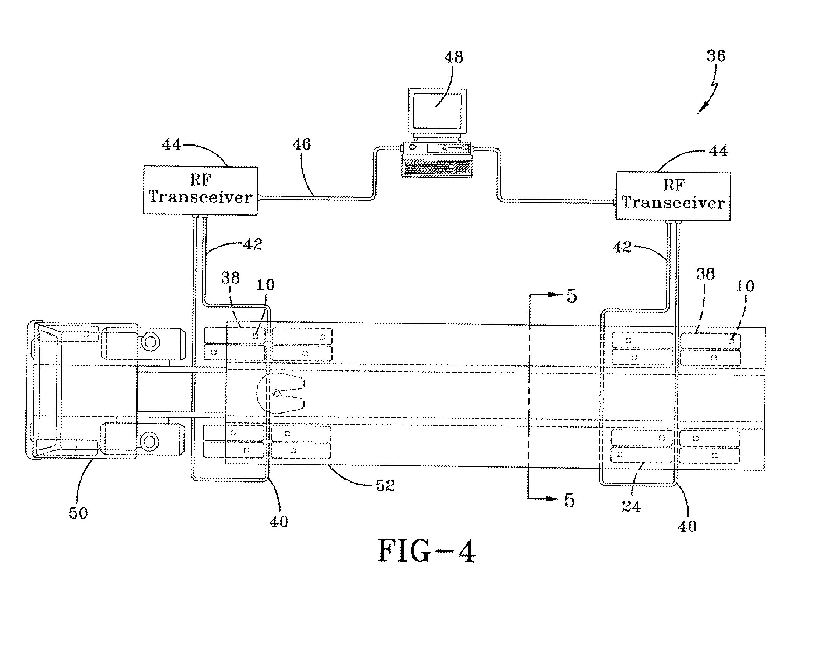

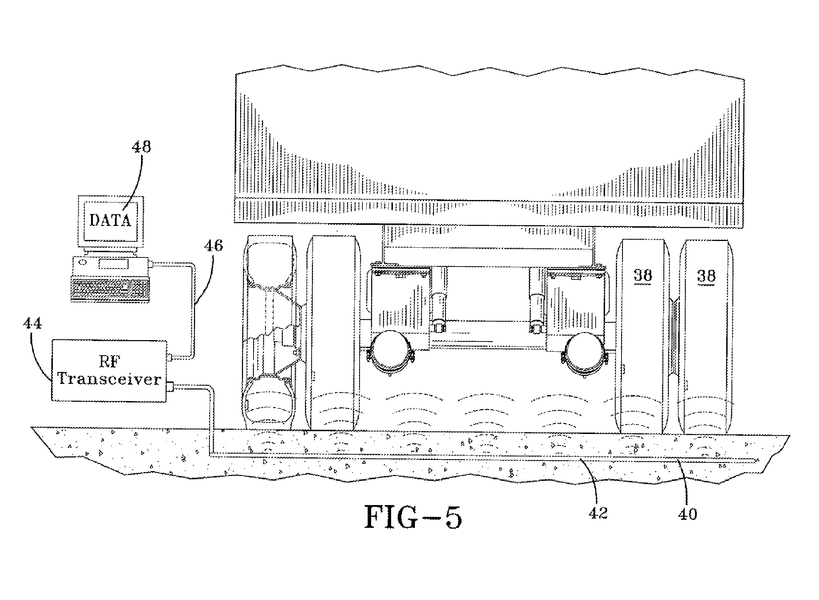

It will be appreciated that the read station 36 may be utilized in a commercial trucking operation to monitor and identify a tractor 50 and a trailer 52 as shown in FIGS. 4 and 5. While the read station shown represents a fixed means for reading data stored in the RFID tag 10, other known reading devices commercially available may be utilized. Hand held readers may be employed to interface with RFID tags for the purpose of accessing data stored therein. The present invention may be used in RFID tags affixed to objects of various types and configuration or attached to packaging for such products.

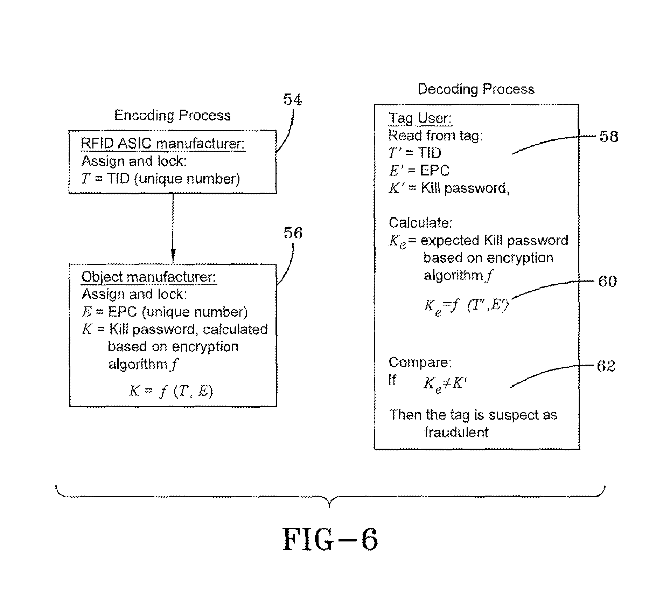

The method disclosed herein is for detecting that a given RFID tag is counterfeit and uses only information on the tag without recourse or need for accessing a database. The methodology requires one field (memory area) of the tag to have been uniquely written to and permanently locked into tag memory by the RFID chip manufacturer. The encoding of the chip by the RFID manufacturer to include a unique number identifying the chip is referred to at 54 in FIG. 6. This field, for example, could be the tag identification (TID) for a NXP G2XM RFID chip (manufactured and sold by NXP Semiconductors having a business address at High Tech Campus 60, 5656 AG Eindhoven, The Netherlands), or the unique identifier in the user data field of a Impinj Monza ID chip (manufactured and sold by Impinj, Inc., having a business address at 701 N. 34th Street, Suite 300, Seattle, WA 98103). In the subject method, the permanently locked unique ID (TID) is used as plain text and run through an encryption algorithm, preferably by an object manufacturer of the product to which the tag is to be affixed. The encrypted result is stored in one of the other memory fields (access_pwd, kill_pwd or user data). The object manufacturer assigns and locks (56 in FIG.6) a unique electronic identification number E, commonly referred to as the electronic product code EPC into tag memory. The number E uniquely identifies the product to which the tag is affixed. A kill password K is then calculated, assigned, and locked into tag memory based on an encryption algorithm f wherein K=f(T, E).

It will be appreciated that the aforementioned assignment and locking of the TID and E into tag memory is done by two separate entities or parties; typically but not necessarily the chip manufacturer (TID) and the object manufacturer (E). The two unique numbers, each assigned and locked into memory by an unrelated separate party, are then employed by means of an encryption algorithm to calculate a Kill Password K. In allocating responsibility for the assignment and locking of two unique numbers TID and E to two unrelated entities or parties, the resultant generated Kill Password K is not only unique but also incapable of reconstruction from the knowledge of one but not both unique numbers TID and E.

The decoding process as shown in FIG. 6 includes a tag user reading (58 in Fig. 6) from the actual tag on a product or object: T'-TID; E'=EPC; and K'=kill password. From the values of T' and E', an expected Kill Password Ke is calculated (60 in FIG. 6) based upon the encryption algorithm f wherein Kₑ=f (T', E'). The calculated expected Kill Password Kₑ is then compared (step 62 of FIG. 6) with the Kill Password K'. If the comparison yields an inequality, the tag is suspect as fraudulent. If the comparison yields equality, the tag is presumed authentic. It will be noted from the above that the read Kill Password K' is derived from unique numbers TID and E assigned and locked by separate entities (typically the chip manufacturer and the object manufacturer, respectively). The authenticity of the read Kill Password K' therefore carries a high level of confidence inasmuch as a counterfeit chip would not be able to readily duplicate the numbers TID and E required to replicate the Kill Password. When checking for fraud, the unique TID and E are run through the encryption algorithm, and then compared to the corresponding memory field. In this way, if someone were to copy all the fields (except the manufacturers unique EPC number), the tag would be identified as fraud, as the encryption would result in the wrong encrypted value.

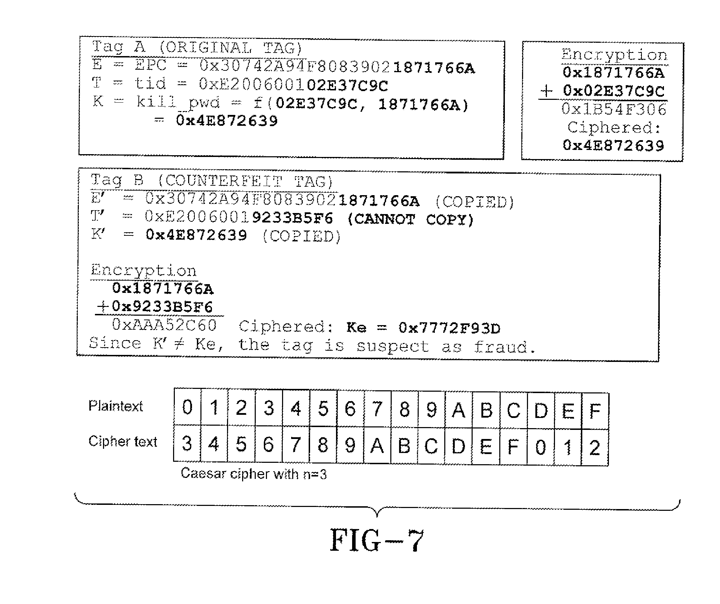

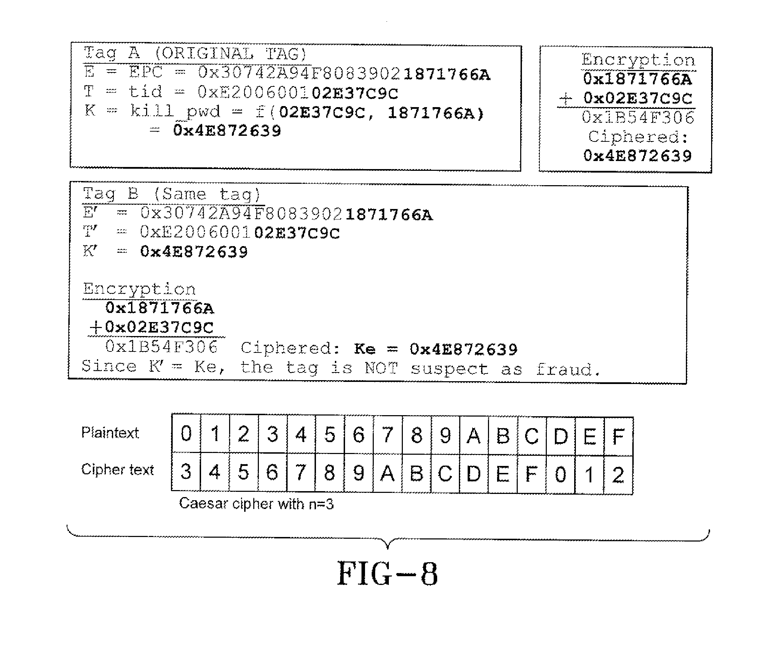

FIG. 7 illustrates by example operation of the subject methodology. TAG A, the original tag, is assigned a unique tid by the tag manufacturer. EPC is assigned and locked by the object manufacturer with a kill_pwd calculated based upon an encryption algorithm such as the 32-bit truncated addition of the EPC and TID and the subsequent application of a Caesar cipher with n=3 shown. The kill_pwd is a function of the tid assigned by the tag manufacturer.

TAG B represents a counterfeit tag. The data read from the TAG B reveals a copied EPC and a copied kill-pwd number. However, the TID number cannot be copied and the TID for the TAG B accordingly differs from TAG A. If the tag were genuine, the kill password should be Kₑ = f(0x1871766A, 0x9233B5F6) = 0x7772F93D which does not equal the copied kill_pwd K' = 0x4E872639. Therefore, the tag is suspect. Conversely, if the kill passwords were the same, the authenticity of the tag would be shown. Other encryption algorithms may be utilized if desired. The use of multiple identification numbers assigned by different parties, the generation of a kill password as a function of a number TID that cannot be copied, allows for the detection of a fraudulent tag that generates a kill password that does not equate.

## Claims

1. A method for determining a counterfeit RFID tag from an authentic RFID tag (10), the method comprising:
reading from a tag (10) a number T' wherein T' is a tag identification number (TID), a number E' wherein E' is an electronic product code (EPC), and a kill password K';
calculating an expected kill password Kₑ based on an encryption algorithm f using T' and E';
comparing Kₑ to K';
concluding the tag is suspected counterfeit if Kₑ does not equal K'.

2. The method of claim 1 further comprising:
assigning a unique tag identification number T wherein T is a tag identification number TID;
locking the unique number T into the tag memory;
assigning a secondary unique number E wherein E is an electronic product code EPC;
locking the unique number E into the tag memory;
deriving a kill password K calculated based on the encryption algorithm f using T and E;
locking the kill password K into the tag memory.

3. The method of claim 1 and 2, comprising:
assigning a unique tag identification number T wherein T= tag identification number TID;
locking the unique number T into the tag memory;
assigning a secondary unique number E wherein E= a unique electronic product code EPC;
locking the unique number E into the tag memory;
deriving a kill password K calculated based on an encryption algorithm f wherein K = f(T, E);
locking the kill password K into tag memory;
reading from the tag T' = TID; E' = EPC; and K' = kill password;
calculating an expected kill password Kₑ based on the encryption algorithm f wherein Kₑ = f (T', E');
comparing Kₑ to K';
concluding the tag is suspected counterfeit if Kₑ does not equal K'.

4. The method of at least one of the previous claims, wherein an access password, a user memory, or other user programmable field is used in place of or as the kill password and/or the EPC.

5. The method of at least one of the previous claims, the method comprising conducting the assigning and locking of the tag identification number T by a tag sourcing first party.

6. The method of at least one of the previous claims, the method further comprising incorporating the RFID tag into an object by a tag incorporating second party.

7. The method of claim 6, further comprising deriving a kill password K by the tag incorporating second party.

8. The method of claim 7, further comprising conducting the assigning and locking of the tag identification number TID by a RFID tag sourcing party.

9. The method of claim 6, 7 or 8, wherein the tag incorporating second party is an object sourcing party.

10. The method of at least one of the previous claims, wherein the RFID tag sourcing party is a RFID manufacturer.

11. The method of at least one of the previous claims, wherein the object is a tire (24).

12. The method of claim 1, 2 or 3, further comprising concluding the tag (10) is authentic if Kₑ=K'.

13. A method for determining a counterfeit from an authentic RFID tag (10), the method comprising:
assigning a unique tag identification number T by a first party wherein T= tag identification number TID;
locking the unique number T into a tag memory by the first party;
transferring the RFID tag (10) to a second party;
assigning a secondary unique number E by the second party wherein E= an electronic product code EPC;
locking the secondary unique number E into tag memory by the second party;
deriving a kill password K by the second party calculated based on an encryption algorithm f wherein K = f(T, E);
locking the kill password K by the second party into tag memory;
reading from the tag T'=TID; E'=EPC and K'=kill password;
calculating an expected kill password Kₑ based on the encryption algorithm f wherein Kₑ = f (T', E');
comparing Kₑ to K';
concluding the tag (10) is suspected counterfeit if Kₑ does not equal K'.

14. The method of claim 13 further comprising concluding the tag is an authentic tag if Kₑ equals K'.
